# EUROPÄISCHE PATENTSCHRIFT

(11) **EP 2 877 384 B1**
(45) Veröffentlichungstag und Bekanntmachung des Hinweises auf die Patenterteilung: **18.07.2018**
(21) Anmeldenummer: 13758769.7
(22) Anmeldetag: 23.08.2013
(51) Int. Cl.: B61L 27/00, G01M 17/08

(54) **VERFAHREN ZUR DIAGNOSE VON STRECKENKOMPONENTEN EINES STRECKENNETZES DES SCHIENENVERKEHRS**
METHOD FOR DIAGNOSING RAILROAD COMPONENTS OF A RAILROAD NETWORK FOR RAIL TRANSPORT
PROCÉDÉ PERMETTANT DE DIAGNOSTIQUER DES ÉLÉMENTS DE TRONÇON D'UN RÉSEAU FERROVIAIRE

(30) Priorität: 18.09.2012 EP 12184836; 30.01.2013 DE 102013201488
(43) Veröffentlichungstag der Anmeldung: 03.06.2015
(73) Patentinhaber: Siemens Aktiengesellschaft, 80333 München (DE)
(72) Erfinder: FISCHER, Erhard, 90762 Fürth (DE); MÜLLER, Thomas, 90552 Röthenbach/Pegnitz (DE); POPP, Frank, 90766 Fürth (DE); PUNSTEIN, Dirk, 90425 Nürnberg (DE); SCHULZE, Christian, 90419 Nürnberg (DE); TÖNSING, Ekkehard, 91353 Hausen (DE)
(86) Internationale Anmeldenummer: PCT/EP2013/067508
(87) Internationale Veröffentlichungsnummer: WO 2014/044485

(56) Entgegenhaltungen:
- EP-A1- 1 900 597
- GB-A- 2 437 156

## Beschreibung

Die Erfindung betrifft ein Verfahren und ein System zur Diagnose eines Betriebszustands einer oder mehrerer Streckenkomponenten eines Streckennetzes des Schienenverkehrs, welche jeweils zumindest eine Messeinrichtung zur Erfassung von Messwerten zumindest einer Messgröße umfassen, wobei der Betriebszustand durch zumindest eine Messgröße charakterisiert wird.

Es sind Streckenkomponenten eines Streckennetzes des Schienenverkehrs bekannt geworden, welche Messeinrichtungen aufweisen, um Messwerte einer Messgröße zu erfassen. So ist beispielsweise ein Strommessgerät an einer Weiche angeordnet, um Messwerte eines Motorstroms zum Stellen der Weiche aufzunehmen. Anschließend werden die Messwerte ausgewertet, indem sie beispielsweise jeweils mit einem vorher festgelegten Schwellwert verglichen werden. Übersteigt ein Messwert der Streckenkomponente den Schwellwert, so wird auf eine Fehlfunktion der Streckenkomponente geschlossen. Aus dem Dokument EP 1 900 597 A1 ist ein Verfahren zur Diagnose des Zustands einer Streckenkomponente bekannt, bei dem neben der Erfassung von ersten Messwerten, die zur Beschreibung des Betriebszustands der Streckenkomponente geeignet sind, weitere, zweite Messwerte erfasst werden, die vom Betriebszustand der Streckeneinrichtung unabhängig sind.

Der Erfindung liegt die Aufgabe zugrunde, ein Verfahren und ein System vorzuschlagen, um präzise Vorhersagen zur Instandhaltung zu treffen.

Gelöst wird die Aufgabe durch die Gegenstände der unabhängigen Patentansprüche 1 und 8. Weiterbildungen und Ausgestaltungen der Erfindung finden sich in den Merkmalen der abhängigen Patentansprüche wieder.

Ein erfindungsgemäßes Verfahren zur Diagnose des Betriebszustands einer oder mehrerer Streckenkomponenten eines Streckennetzes des Schienenverkehrs, welche Streckenkomponenten jeweils zumindest eine erste Messeinrichtung zur Erfassung von ersten Messwerten zumindest einer Messgröße umfassen, welche zur Beschreibung des Betriebszustands der jeweiligen Streckenkomponente dienen, umfasst folgende Verfahrensschritte:
- Erfassen von ersten Messwerten mittels der zumindest einen, ersten Messeinrichtung von der zumindest einen Streckenkomponente,
- Erfassen von weiteren, von dem Betriebszustand der zumindest einen Streckenkomponente unabhängigen, zweiten Messwerten mittels zumindest einer weiteren, zweiten Messeinrichtung,
- Übermitteln zumindest der ersten der Messwerte zu einem streckenseitig angeordneten Kontrollzentrum,
- Auswerten der ersten Messwerte im Kontrollzentrum mittels eines vorgegebenen Algorithmus unter Berücksichtigung der zweiten Messwerte, wobei die Auswertung der ersten Messwerte mittels des vorgegebenen Algorithmus in unmittelbarer Abhängigkeit von den zweiten Messwerten erfolgt, und
- Bereitstellen zumindest eines Ergebnisses der Auswertung zur Ausgabe.

Zumindest eine Streckenkomponente eines Streckennetzes für Schienenfahrzeuge, insbesondere geeignet für den Personenverkehr, umfasst zumindest eine erste Messeinrichtung, gelegentlich auch als Messaufnehmer bezeichnet. Diese ist insbesondere in oder an der Streckenkomponente angeordnet. Als nicht abschließende Auflistung von Messeinrichtungen seien hier aufgeführt: Strom-/Spannungserfassung, Temperaturfühler und/oder Lagesensorik.

Die ersten Messwerte, erfasst von der ersten Messeinrichtung der zumindest einen Streckenkomponente, sind abhängig von einem Betriebszustand oder einer Betriebszustandsänderung der zumindest einen Streckenkomponente und dienen daher zur Beschreibung des Betriebszustands. Der Betriebszustand der zumindest einen Streckenkomponente beschreibt zu einem vorgegebenen Zeitpunkt die Eigenschaften der Streckenkomponente vollständig, sofern sie nicht schon mit den unveränderlichen Eigenschaften der Streckenkomponente als solches festliegen. Zur vollständigen Beschreibung der Eigenschaften der Streckenkomponente zum vorgegebenen Zeitpunkt können neben den ersten Messwerten zur Messgröße weitere Informationen erforderlich sein.

Die weiteren, zweiten Messwerte werden dagegen unabhängig vom Betriebszustand oder Betriebszustandsänderungen der zumindest einen Streckenkomponente von der zweiten Messeinrichtung erfasst. Die zweite Messeinrichtung ist dabei beispielsweise als Teil einer Messstelle frei von der zumindest einen Streckenkomponente, insbesondere beabstandet von ihr, angeordnet. Die zweite Messeinrichtung muss nicht zwingend stationär sein, beispielsweise ist sie auf einem Fahrzeug, insbesondere einem Schienenfahrzeug, angeordnet. Insbesondere handelt es sich bei der oder den zweiten Messeinrichtungen jedoch um streckenseitig angeordnete, unbewegliche Messeinrichtungen. So können die zweiten Messwerte beispielsweise von einer zentralen Stelle, wie dem Wetterdienst, erfasst werden und beziehen sich auf die unmittelbare oder die mittelbare Umgebung der Streckenkomponente.

Diese weiteren, zweiten Messwerte sind Messwerte zu der mindestens einen Messgröße, zu welcher auch die ersten Messwerte der Streckenkomponente erfasst werden, und/oder die weiteren, zweiten Messwerte sind Messwerte zu weiteren Messgrößen. Die zweiten Messwerte sind unabhängig von den Werten der ersten Messwerte. Der umgekehrte Fall gilt nicht notwendigerweise. So erfasst beispielsweise ein Temperaturfühler als erste Messeinrichtung der Streckenkomponente Messwerte der Messgröße Temperatur der Streckenkomponente. Ein von der Streckenkomponente freier und unabhängiger Temperaturfühler, beispielsweise in der Nähe der Streckenkomponente positioniert, erfasst seinerseits die Temperatur der Luft in seiner Umgebung. Die Temperatur der Streckenkomponente steigt an, in Abhängigkeit der ansteigenden Temperatur der Luft der Umgebung. Eine ansteigende Temperatur der Streckenkomponente beeinflusst hingegen die Temperatur der Luft der Umgebung nur unwesentlich und ist daher zu vernachlässigen - die Temperatur der Luft der Umgebung gilt in diesem Anschauungsbeispiel als unabhängig von der Temperatur der Streckenkomponente.

Die zweiten Messwerte können, zusätzlich zu den ersten Messwerten, ebenfalls zum Kontrollzentrum übermittelt werden und in die Auswertung der ersten Messwerte mit einfließen. Eine Auswertung der ersten Messwerte im Kontrollzentrum mittels des vorgegebenen Algorithmus erfolgt in unmittelbarer Abhängigkeit von den zweiten Messwerten.

Gemäß einer Weiterbildung der Erfindung werden sowohl die ersten, als auch die zweiten Messwerte mittels des vorgegebenen Algorithmus ausgewertet. In jedem Fall ist das zumindest eine Ergebnis der Auswertung abhängig von den ersten, wie auch von den zweiten Messwerten.

Zur Auswertung können viele verschiedene Algorithmen Verwendung finden. So kann gemäß einem Ausführungsbeispiel der Erfindung der vorgegebene Algorithmus geeignet sein zur Trendanalyse einer Messreihe zumindest von ersten Messwerten einer vorgegebenen Messgröße. Ändert sich die Temperatur mit der Zeit kann hiermit vorausgesagt werden, wann eine vorgegebene Grenztemperatur voraussichtlich überschritten werden wird. Weitere Beispiel-Algorithmen sind in der nachfolgenden, offenen, nicht abschließenden Auflistung enthalten: Frequenzanalyse, Stromverlauf, Spannungsverlauf, Laufzeit.

Die Übermittlung der ersten Messwerte von der Streckenkomponente zum Kontrollzentrum erfolgt beispielsweise drahtlos. Eine drahtlose Übermittlung geschieht dabei zumindest abschnittsweise, d.h. die Übermittlung muss nicht über den gesamten Weg von der Streckenkomponente zum Kontrollzentrum drahtlos sein. Eine drahtlose Übermittlung findet beispielsweise per DFÜ-Verbindung, wie über ein GSM-, UMTS- oder LTE-Netz, zwischen der Streckenkomponente und einer Sende- und Empfangsanlage dieses Netzes statt. Zwischen der Empfangsanlage und dem Kontrollzentrum kann die weitere Übermittlung der Messdaten auch drahtgebunden erfolgen. Die ersten Messwerte werden weitergebildet in einem vorgegebenen Zyklus von der Streckenkomponente zum Kontrollzentrum übermittelt. Die Übermittlung der ersten Messwerte von der Streckenkomponente zum Kontrollzentrum erfolgt dabei insbesondere frei von vorgegebenen Betriebszuständen oder Betriebszustandsänderungen der Streckenkomponente. Zur Übermittlung der ersten Messwerte von der Streckenkomponente zum Kontrollzentrum weist die Streckenkomponente einen Sender und das Kotrollzentrum einen Empfänger auf. Anstelle von der Übermittlung kann auch von einer Übertragung gesprochen werden. Sender und Empfänger sind zueinander komplementär ausgestaltet. Das Kontrollzentrum ist strecken- und damit landseitig und insbesondere ortsfest und entfernt von der Streckenkomponente angeordnet.

Analog zur Übermittlung der ersten Messwerte können auch die zweiten Messwerte von der zumindest einen weiteren, zweiten Messeinrichtung zum Kontrollzentrum, insbesondere zyklisch, übermittelt werden. Werden erste und zweite Messwerte zyklisch übermittelt kann der Zyklus identisch sein. Werden die zweiten Messwerte hingegen von einer zweiten Messeinrichtung am Kontrollzentrum erfasst, scheint eine Übermittlung hinfällig. Eine drahtlose Übertragung der zweiten Messwerte zum Kontrollzentrum ist natürlich ebenfalls möglich.

Dort findet die Auswertung der Messwerte mittels eines vorgegebenen Algorithmus statt. Dafür weist das Kontrollzentrum insbesondere einen Controller auf, welcher geeignet ist zur Auswertung der ersten und gegebenenfalls der zweiten Messwerte mittels des vorgegebenen Algorithmus. Der Algorithmus liegt vorteilhaft als Software vor. Dies birgt den Vorteil einer einfachen und schnellen Anpassung des Algorithmus. Algorithmus und Messwerte können in einem Speicher gehalten werden, wie auch Zwischenergebnisse der Auswertung. Die Auswertung führt zu zumindest einem Ergebnis. Dieses zumindest eine Ergebnis wird vom Kontrollzentrum bereitgestellt.

Es kann zusätzlich auf ein Schienenfahrzeug übermittelt werden und dort in vorgegebener Form ausgegeben, beispielsweise visualisiert, und/oder das Ergebnis der Auswertung wird streckenseitig, insbesondere im Kontrollzentrum in vorgegebener Form ausgegeben, beispielsweise visualisiert. Alternativ ist auch eine Ausgabe beim Kunden möglich. Das Ergebnis der Auswertung kann auch über das Internet zur Verfügung gestellt werden, um von unterschiedlichen Stellen darauf zurückzugreifen. Eine Visualisierung erfolgt beispielsweise als Darstellung auf einem Bildschirm. Neben Visualisierungen kommen auch die akustische Ausgabe, taktile Rückmeldung oder SMS als weitere Ausgabeformen in Betracht. Das Ergebnis einer Auswertung der ersten und zweiten Messwerte mittels des vorgegebenen Algorithmus kann als solches mehrere entsprechende Formen annehmen. Es kann ein einfaches Stop-Signal sein, welches als akustischer Alarm dem Fahrzeugführer des Schienenfahrzeugs ausgegeben wird. Andererseits kann es sich um eine Diagnose oder Ausfall-Prognose für die zumindest eine Streckenkomponente handeln, welche einer Wartungsmannschaft zur Erstellung eines Wartungsplans für die Streckenkomponente ausgegeben wird. Als weiteres Beispiel sei hier eine Lebensdauerprognose genannt. Das Verfahren ist geeignet für eine vorausschauende Instandhaltung, englisch predictive maitenance, und damit geeignet, Vorhersagen über die Wahrscheinlichkeit eines technischen Ausfalls einer Streckenkomponente zu treffen und/oder um diesem vorzubeugen, entsprechende Wartungsintervalle zu planen.

Zur Übermittlung des Ergebnisses vom Kontrollzentrum zum Schienenfahrzeug weisen Kontrollzentrum und Schienenfahrzeug zueinander komplementäre Sende- und Empfangsanlagen auf. Die Ergebnisse werden dann vom streckenseitig angeordneten Kontrollzentrum zum Schienenfahrzeug insbesondere streckenweise drahtlos übermittelt.

Das Bereitstellen des Ergebnisses durch das Kontrollzentrum hat neben der Möglichkeit des örtlich unbeschränkten Zugriffs auf das Ergebnis den weiteren Vorteil eines zeitlich unbeschränkten Zugriffs. So werden gemäß einer weiteren Ausführungsform mehrere Ergebnisse unterschiedlicher Zeitpunkte für einen vorgegebenen Zeitraum im Kontrollzentrum gespeichert und zur Ausgabe bereitgestellt. Der Speicher muss einerseits damit nicht im Schienenfahrzeug mitgeführt werden. Andererseits kann die Ausgabe eines oder mehrerer Ergebnisse auch in Abhängigkeit von Ereignissen, wie auch in Abhängigkeit vom Ergebnis der Auswertung selbst, oder in Abhängigkeit von Zuständen oder Zustandsänderungen der Streckenkomponente erfolgen. Dies wird aus als eventgesteuert bezeichnet.

Verfolgt beispielsweise die Auswertung das Ziel einer Feststellung der augenblicklichen, sicheren Betriebstüchtigkeit der Streckenkomponente, kann das Ergebnis der Auswertung "positiv" oder "negativ" lauten. Das Ergebnis selbst wird vom Kontrollzentrum bereitgestellt, selbst, wenn es "positiv" ist. Übermitteln und/oder Ausgegeben wird das Ergebnis "positiv" aber nicht; nur ein Ergebnis "negativ" wird übermittelt und/oder ausgegeben, beispielsweise als "Stop-Signal" für den Fahrzeugführer. Die Ausgabe zumindest eines Ergebnisses und/oder die Übermittlung zumindest eines Ergebnisses vom Kontrollzentrum zu zumindest einem Schienenfahrzeug kann daher vom Ausgang der Auswertung abhängen. Die Übermittlung von ersten Messwerten von der Streckenkomponente zum Kontrollzentrum dagegen erfolgt frei von vorgegebenen Zuständen oder Zustandsänderungen der Streckenkomponente. Es handelt sich dabei also nicht um eine eventgesteuerte Übermittlung, sondern sie wird zyklisch durchgeführt. Analog können die zweiten Messwerte ebenfalls zyklisch übermittelt werden.

Gemäß einer weiteren Weiterbildung des erfindungsgemäßen Verfahrens umfasst das Streckennetz zumindest eine Gruppe identisch ausgestalteter Streckenkomponenten, wobei
- erste Messwerte zu zumindest einer vorgegebenen Messgröße für jede der identisch ausgestalteten Streckenkomponenten mittels jeweils zumindest einer ersten Messeinrichtung jeder Streckenkomponente erfasst werden,
- die erfassten ersten Messwerte von den Streckenkomponenten zu einem streckenseitig angeordneten Kontrollzentrum übermittelt werden,
- die erfassten ersten Messwerte im Kontrollzentrum mittels des vorgegebenen Algorithmus ausgewertet werden, und
- zumindest ein Ergebnis der Auswertung zur Ausgabe vom Kontrollzentrum bereitgestellt wird.

Als einfache Auswertung mittels des vorgegebenen Algorithmus werden die Messwerte von den identisch ausgestalteten Streckenkomponenten im Kontrollzentrum miteinander verglichen. Anschließend kann auf einen fehlerhaften Zustand einer der identisch ausgestalteten Streckenkomponenten geschlossen werden, wenn ein Messwert der Streckenkomponente mindestens um ein vorgegebenes Maß von den anderen Messwerten der Anderen der identisch ausgestalteten Streckenkomponenten abweicht.

Die Messwerte zu den identischen Streckenkomponenten, welche miteinander verglichen werden, werden insbesondere zeitgleich erfasst.

Gemäß einer weiteren Weiterbildung wird ein Signal bei einer Abweichung eines Messwerts einer Streckenkomponente von den anderen Messwerten der Anderen der identisch ausgestalteten Streckenkomponenten um zumindest das vorgegebene erste Maß ausgegeben. Das Signal kann beispielsweise die Form eines akustischen Alarms oder einer visuellen Darstellung annehmen. Ein weiteres Signal generiert beispielsweise einen Termin innerhalb einer vorgegebenen Frist in einem Wartungsterminkalender der Streckenkomponente.

Zum Vergleichen der Messwerte von den identisch ausgestalteten Streckenkomponenten können im Kontrollzentrum beispielsweise folgende Verfahrensschritte ausgeführt werden:
- Speichern der von den Streckenkomponenten zum Kontrollzentrum übermittelten ersten Messwerte,
- Berechnen von Abständen der ersten Messwerte zueinander,
- Vergleichen der Abstände mit dem vorgegebenen ersten Maß.

Auf einen fehlerhaften Zustand einer ersten Streckenkomponente wird geschlossen, und gegebenenfalls ein Signal ausgegeben, wenn der Abstand eines ersten Messwerts der ersten Streckenkomponente zu einem ersten Messwert einer weiteren, identisch ausgestalteten, zweiten Streckenkomponente ein vorgegebenes erstes Maß übersteigt.

Neben der einfachen Bestimmung der Abstände der einzelnen, zeitgleich erfassten ersten Messwerte der identisch ausgestalteten Streckenkomponenten zueinander, sind viele weitere Algorithmen denkbar, um eine Abweichung zumindest eines Messwerts von den anderen Messwerten zu erkennen. Bekannte Algorithmen hierfür sind beispielsweise die Bestimmung der einzelnen Residuen zu einer Modellfunktion erhalten durch die Methode der kleinsten Fehlerquadrate, die Bestimmung der einzelnen Abweichungen zum Erwartungswert und weitere Modelle der statistischen Analyse.

Des Weiteren können mehrere Maße vorgegeben werden, um bei Abweichung unterschiedliche Schlüsse zu ziehen und gegebenenfalls entsprechende Ergebnisse auszugeben. So kann bei einer Abweichung zumindest eines ersten Messwerts um ein erstes Maß lediglich eine vorzunehmende Wartung angezeigt werden, bei einer Abweichung um ein zweites Maß hingegen kann ein nahender Ausfall der entsprechenden Streckenkomponente angezeigt und vor diesem mit einem Signal gewarnt werden.

Gemäß einer weiteren Weiterbildung wird zumindest das erste Maß in Abhängigkeit von den weiteren, zweiten Messwerten zu der Messgröße und/oder zu einer oder mehrerer weiteren Messgrößen vorgegeben, welche weiteren, zweiten Messwerte mittels der zumindest einen weiteren, zweiten Messeinrichtung erfasst wird, welche unabhängig von den Streckenkomponenten und damit auch unabhängig von den Betriebszuständen der Streckenkomponenten ist und welche weiteren, zweiten Messwerte selbstverständlich auch unabhängig von den Betriebszuständen der identisch ausgestalteten Streckenkomponenten erfasst sind.

Messgrößen, zu welchen erste Messwerte und/oder zweite Messwerte erfasst werden können, sind beispielsweise Geschwindigkeit, Drehzahl, Strom und/oder Spannung, Temperatur, Druck oder Beschleunigung. Entsprechende Messeinrichtungen sind vergleichbar vorzusehen. Drehzahlen und/oder Temperaturen können beispielsweise von Motoren, Getrieben oder Rädern erfasst werden.

Gemäß einem Veranschaulichungsbeispiel werden die Abstände zwischen den einzelnen ersten Messwerten von den identisch ausgestalteten Streckenkomponenten zu der Messgröße, welche die Betriebszustände der Streckenkomponenten charakterisiert, errechnet. Handelt es sich bei der Messgröße um die Temperatur und werden die entsprechenden ersten Messwerte zu den identisch ausgestalteten Streckenkomponenten erfasst, welche jeweils an vergleichbaren Stellen im Streckennetz positioniert sind, so ist das vorgegebene erste Maß unabhängig von einer Umgebungstemperatur der Streckenkomponenten, da bei steigender Umgebungstemperatur alle Messwerte zu den identisch ausgestalteten Streckenkomponenten ebenfalls nach oben verschoben werden. Sind jedoch die identisch ausgestalteten Streckenkomponenten an stark unterschiedlichen Stellen im oder am Streckennetz positioniert, kann die Umgebungstemperatur einen Einfluss auf die ersten Messwerte der Temperatur der einzelnen Streckenkomponenten haben. So können die ersten Messwerte der Temperatur einer ersten Streckenkomponente wesentlich angehoben sein, bei einer wesentlich höheren Umgebungstemperatur um die erste Streckenkomponente, im Vergleich zu einer zweiten Streckenkomponente, bei einer wesentlich geringeren Umgebungstemperatur um die zweite Streckenkomponente. Zusätzlich können auch Messwerte zu anderen Messgrößen berücksichtigt werden. So ist beispielsweise die Temperatur einer im Freien angeordneten Streckenkomponente im Wesentlichen abhängig von der Sonneneinstrahlung, im Gegensatz zu einer abgeschattet angeordneten, ansonsten jedoch identisch ausgestalteten Streckenkomponente. Für jeden ersten Messwert zur vorgegebenen Messgröße von den identisch ausgestalteten Streckenkomponenten kann, in Abhängigkeit von zweiten Messwerten zu einer oder mehrerer weiterer Messgrößen und/oder in Abhängigkeit von Messwerten zur selben Messgröße, welche unabhängig von den identisch ausgestalteten Streckenkomponenten erfasst werden, zumindest ein erstes Maß oder weitere Maße vorgegebenen werden. Die ersten Maße können sich somit von Messwert zu Messwert zur vorgegebenen Messgröße von den identisch ausgestalteten Streckenkomponenten und/oder von zugehöriger Streckenkomponente zu Streckenkomponente voneinander unterscheiden.

Weisen nun identisch ausgestaltete Streckenkomponenten jeweils zwei Temperaturfühler auf, einen ersten Temperaturfühler an einer ersten Stelle einer jeden Streckenkomponente und einen weiteren, zweiten Temperaturfühler an einer von der ersten Stelle verschiedenen, zweiten Stelle jeder Streckenkomponente, so können ausschließlich die ersten Messwerte der ersten Temperaturfühler miteinander verglichen werden und analog die ersten Messwerte der zweiten Temperaturfühler. Dies ist jedoch nicht zwingend erforderlich. Gleichermaßen können alle ersten Messwerte zur vorgegebenen Messgröße, und wie oben bereits ausgeführt, auch weitere, zweite Messwerte zur selben und/oder anderen Messgrößen miteinander verglichen werden, um auf einen fehlerhaften Zustand einer Streckenkomponente zu schließen, beispielsweise indem zweite Messwerte zu weiteren Messgrößen mit den ersten Messwerten zur vorgegebenen Messgröße verglichen werden, um daraus das vorgegebene erste Maß abzuleiten.

Wie bereits ausgeführt, werden nicht nur die ersten Messwerte zu den identischen Streckenkomponenten, welche miteinander verglichen werden, zeitgleich erfasst, sondern auch die zweiten Messwerte. Dies schließt nicht aus, dass Ausreißer einer Messreihe aus einander folgenden Messwerten herausgefiltert oder die Messreihe geglättet wird.

Durch das zentrale Auswerten der Messwerte von mehreren Streckenkomponenten lässt sich sehr einfach eine Wartungsreihenfolge der Streckenkomponenten festlegen.

Eine Streckenkomponente zur Ausführung des erfindungsgemäßen Verfahrens umfasst somit zumindest eine erste Messeinrichtung zur Erfassung von ersten Messwerten zumindest einer Messgröße und zumindest einen Sender zur Übermittlung der Messwerte von der Streckenkomponente zum Kontrollzentrum. Messaufnehmer gilt als äquivalente Bezeichnung für Messeinrichtung.

Eine weitere, von der Streckenkomponente unabhängige Messstelle umfasst zumindest eine weitere, zweite Messeinrichtung zur Erfassung von weiteren, vom Betriebszustand der Streckenkomponente unabhängigen, zweiten Messwerten und einen Sender zur Übermittlung der Messwerte von der weiteren Messstelle zum Kontrollzentrum. Die zumindest eine weitere, zweite Messeinrichtung ist beabstandet von der zumindest einen Streckenkomponente angeordnet. Der Abstand ist dabei so groß gewählt, dass die zweiten Messwerte unabhängig von dem Betriebszustand der Streckenkomponente und dadurch insbesondere von den Werten der ersten Messwerte sind.

Ein Kontrollzentrum zur Ausführung des erfindungsgemäßen Verfahrens umfasst dagegen zumindest einen Empfänger zur Übermittlung der Messwerte von der Streckenkomponente zum Kontrollzentrum und zumindest einen Controller zum Auswerten der ersten Messwerte mittels eines vorgegebenen Algorithmus unter Berücksichtigung der weiteren, zweiten Messwerte. Gegebenenfalls ist der Controller geeignet zur Auswertung der ersten und zweiten Messwerte mittels des vorgegebenen Algorithmus.

Der Controller ist weitergebildet zur Auswertung der ersten Messwerte mittels voneinander verschiednen Algorithmen geeignet. Die Algorithmen liegen beispielsweise als Software vor. Sie sind leicht ersetzbar und/oder veränderbar. Der Controller kann fürderhin geeignet sein, weitere zweite Messwerte zu verarbeiten, welche mittels der weiteren, zweiten Messeinrichtungen erfasst werden, welche unabhängig von der Streckenkomponente sind.

Aus zumindest einer Streckenkomponente der genannten Art, einer Messstelle der genannten Art und zumindest einem Kontrollzentrum der genannten Art wird ein System oder eine Vorrichtung zur Ausführung des erfindungsgemäßen Verfahrens gebildet. Es kann weiterhin zumindest einen Speicher umfassen, auf welchem die Algorithmen abgespeichert sind, und auf welchen der Controller zugreifen kann. Des Weiteren kann es zumindest ein Mittel, beispielsweise ein Eingabegerät, aufweisen, insbesondere eine sogenannte Mensch-Maschine-Schnittstelle, zur Veränderung des vorgegebenen Algorithmus. Der Controller ist dann geeignet zur Auswertung der ersten und zweiten Messwerte mittels voneinander verschiednen Algorithmen.

Die Erfindung lässt zahlreiche Ausführungsformen zu. Sie wird anhand der nachfolgenden Figuren näher erläutert, in welchen jeweils ein Ausgestaltungsbeispiel dargestellt ist. Gleiche Elemente in den Figuren sind mit gleichen Bezugszeichen versehen.
- Fig. 1: zeigt schematisch ein System aus zwei Streckenkomponenten, einem Schienenfahrzeug und einem Kotrollzentrum zur Ausführung des erfindungsgemäßen Verfahrens,
- Fig. 2: zeigt eine Trendanalyse.

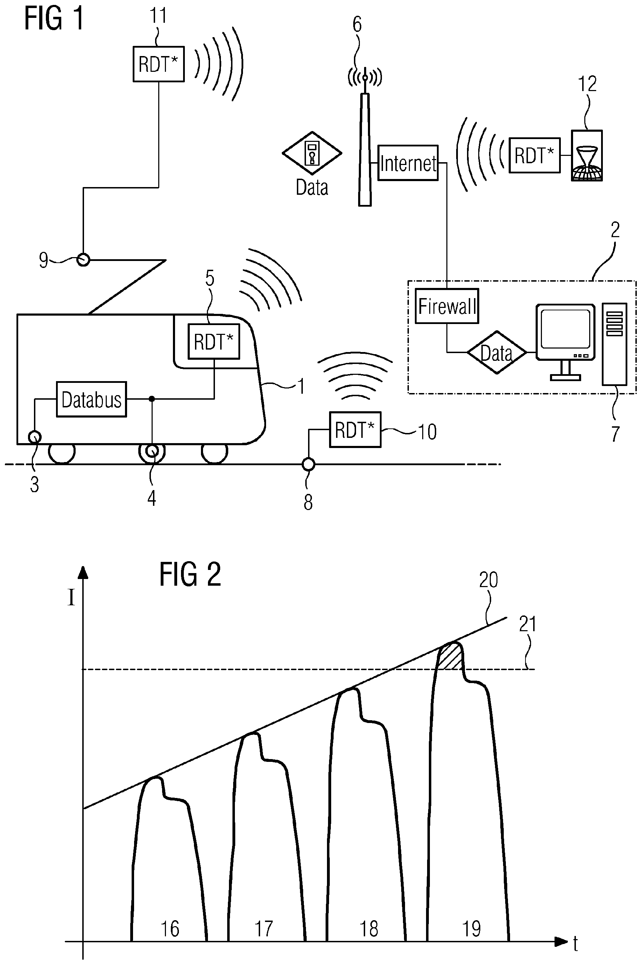

In der Fig. 1 ist ein System aus einem Streckennetz, einem Schienenfahrzeug 1 und einem Kontrollzentrum 2 schematisch dargestellt.

Das Schienenfahrzeug 1 weist verschiedene oder identisch ausgestaltete Fahrzeugkomponenten auf und jeweils zumindest eine zweite Messeinrichtung 3, 4 zum Erfassen von zweiten Messwerten zu zumindest einer vorgegebenen Messgröße für jede Fahrzeugkomponente, beispielsweise ein Tachometer zur Erfassung der aktuellen Geschwindigkeit des Schienenfahrzeugs 1. Darüber hinaus umfasst das Schienenfahrzeug 1 einen Sender 5 zum Senden der zweiten Messwerte an das Kontrollzentrum 2. Die zweiten Messwerte werden von den zweiten Messeinrichtungen 3, 4 über einen Daten-Bus im Schienenfahrzeug 1 an den Sender 5 übermittelt.

Das Kontrollzentrum 2 umfasst wiederum einen Empfänger 6 zum Empfangen der Messwerte vom Schienenfahrzeug 1. Sender 5 und Empfänger 6 sind selbstverständlich zueinander kompatibel. Hier ist der Empfänger 6 als Basisstation eines Mobilfunknetzes dargestellt, welcher beabstandet vom Kontrollzentrum 2 angeordnet ist. Das ortsfeste Kontrollzentrum 2 weist somit eine Vielzahl von möglichen Empfängern auf. Die vom Schienenfahrzeug 1 zum Empfänger 6 übermittelten Messwerte werden in diesem Ausgestaltungsbeispiel über das Internet vom Empfänger 6 zum zumindest einen Controller 7 des Kontrollzentrums zum Vergleichen der Messwerte übermittelt.

Neben den Messwerten zu den Fahrzeugkomponenten, erfasst durch die zweiten Messeinrichtungen 3, 4, werden erste Messwerte vom Controller 7 zur Auswertung berücksichtigt.

Die ersten Messwerte werden hier von der Infrastruktur des Schienenfahrzeugs 1, insbesondere von der Strecke und der Oberleitung, durch erste Messeinrichtungen 8, 9 erfasst, und mittels weiteren Sendern 10, 11 an das Kontrollzentrum 2 übermittelt. Sämtliche ersten Messwerte werden insbesondere verschlüsselt übermittelt. Jedoch auch weitere, gegebenenfalls unverschlüsselte zweite Messwerte, beispielsweise zum Wetter, können in die Auswertung mit einfließen und dadurch Berücksichtigung finden. Hier skizziert das Bezugszeichen 12 zusätzliche Messwertquellen, wie z.B. ein Wetterdienst. RDT* steht im Übrigen für Remote Data Transfer.

Fig. 2 veranschaulicht mittels eines Graphen eine einfache Trendanalyse als Beispiel für einen Algorithmus zur Auswertung von Messwerten. Aufgetragen ist ein zeitlicher Verlauf eines Motorstroms eines Motors zum Öffnen und Schließen einer Weiche als Streckenkomponente über aufeinander nachfolgende Weichenöffnungszyklen. Die Messwerte zu drei Weichenöffnungszyklen 16, 17 und 18 werden im Kontrollzentrum ausgewertet. Es lässt sich ein Motorstromverlauf 19 für den nächsten Weichenöffnungszyklus prognostizieren. Zusätzlich oder alternativ kann ein Trend, dargestellt durch die Gerade 20, errechnet werden. Ist ein Schwellwert 21 vorgegeben, insbesondere in Abhängigkeit von weiteren, hier nicht näher betrachteten, zweiten Messwerten, dessen Überschreiten durch den Motorstrom auf einen fehlerhaften Zustand der Weiche schließen lässt, so ist das Ergebnis der Trendanalyse, dass der Motorstrom voraussichtlich beim nächsten Weichenöffnungszyklus den Schwellwert übersteigt. Dies kann als Ergebnis der Auswertung ausgegeben werden. Die Auswertung könnte jedoch weitergehend die Stilllegung der Weiche anraten, um Schaden abzuwenden, und/oder die Wartung der Weiche in einen Wartungsplan eintragen. Die Ausgabe des Ergebnisses der Auswertung kann auch darin bestehen, dass die Weiche ohne Zutun von Personal automatisch außer Betrieb genommen wird.

## Patentansprüche

1. Verfahren zur Diagnose des Betriebszustands zumindest einer Streckenkomponente eines Streckennetzes für den Schienenverkehr, welche Streckenkomponente zumindest eine erste Messeinrichtung zur Erfassung von ersten Messwerten zumindest einer Messgröße zur Beschreibung des Betriebszustands der Streckenkomponente umfasst, mit folgenden Verfahrensschritten:
- Erfassen der ersten Messwerten mittels der ersten Messeinrichtung,
- Erfassen von weiteren, vom Betriebszustand der Streckenkomponente unabhängigen, zweiten Messwerten mittels zumindest einer weiteren, zweiten Messeinrichtung,
- Übermitteln zumindest der ersten Messwerte zu einem streckenseitig angeordneten Kontrollzentrum,
- Auswerten zumindest der ersten Messwerte im Kontrollzentrum mittels eines vorgegebenen Algorithmus unter Berücksichtigung der zweiten Messwerte, wobei die Auswertung der ersten Messwerte mittels des vorgegebenen Algorithmus in unmittelbarer Abhängigkeit von den zweiten Messwerten erfolgt, und
- Bereitstellen zumindest eines Ergebnisses der Auswertung zur Ausgabe.

2. Verfahren nach Anspruch 1, **dadurch gekennzeichnet, dass** das Ergebnis der Auswertung auf ein Schienenfahrzeug übermittelt wird und, dass das Ergebnis der Auswertung auf dem Schienenfahrzeug ausgegeben wird.

3. Verfahren nach einem der Ansprüche 1 oder 2, **dadurch gekennzeichnet, dass** das Ergebnis der Auswertung streckenseitig ausgegeben wird.

4. Verfahren nach einem der Ansprüche 1 bis 3, **dadurch gekennzeichnet, dass** die ersten Messwerte zyklisch zum Kontrollzentrum übermittelt werden.

5. Verfahren nach einem der Ansprüche 1 bis 4, **dadurch gekennzeichnet, dass** die ersten Messwerte drahtlos zum Kontrollzentrum übermittelt werden.

6. Verfahren nach einem der Ansprüche 1 bis 5, **dadurch gekennzeichnet, dass** der vorgegebene Algorithmus geeignet ist zu einer Trendanalyse der ersten Messwerte.

7. Verfahren nach einem der Ansprüche 1 bis 6, **dadurch gekennzeichnet, dass** die Messgröße, zu welchen erste und/oder zweite Messwerte erfasst werden, ausgewählt sind aus einer Gruppe von folgenden Messgrößen: Geschwindigkeit des Schienenfahrzeugs, Beschleunigung des Schienenfahrzeugs, Drehzahl eines Antriebsmotors, elektrischer Motorstrom, elektrische Spannung eines Motors, thermodynamische Temperatur eines Getriebes.

8. System zur Diagnose des Betriebszustand einer Streckenkomponente eines Streckennetzes für den Schienenverkehr, aus zumindest einer Streckenkomponente, zumindest einem Kontrollzentrum und zumindest einer weiteren Messstelle, welche Streckenkomponente zumindest eine erste Messeinrichtung zur Erfassung von ersten Messwerten zumindest einer Messgröße zur Beschreibung des Betriebszustands der Streckenkomponente und zumindest einen Sender zur Übermittlung der ersten Messwerte von der Streckenkomponente zum Kontrollzentrum umfasst, und welche Messstelle zumindest eine weitere, zweite Messeinrichtung zur Erfassung von weiteren, von dem Betriebszustand der Streckenkomponente unabhängigen, zweiten Messwerten zumindest einer Messgröße umfasst, wobei die zumindest eine weitere, zweite Messeinrichtung beabstandet von der Streckenkomponente angeordnet ist, und welches Kontrollzentrum zumindest einen Empfänger zur Übermittlung der ersten Messwerte von der ersten Messeinrichtung der Streckenkomponente zum Kontrollzentrum und zumindest einen Controller zum Auswerten der ersten Messwerte mittels eines vorgegebenen Algorithmus in unmittelbarer Abhängigkeit von den zweiten Messwerten umfasst.

9. System nach Anspruch 8, **dadurch gekennzeichnet, dass** der Controller geeignet ist zur Auswertung der ersten Messwerte mittels mehrerer, voneinander verschiedenen vorgegebenen Algorithmen.

## Claims

1. Method for diagnosing the operating state of at least one railroad component of a railroad network for rail transport, which railroad component comprises at least one first measuring device for recording first measured values of at least one measurement variable for describing the operating state of the railroad component, having the following method steps of:
- recording the first measured values using the first measuring device,
- recording further, second measured values which are independent of the operating state of the railroad component using at least one further, second measuring device,
- transmitting at least the first measured values to a control center arranged on the line,
- evaluating at least the first measured values in the control center using a predefined algorithm taking into account the second measured values, wherein the first measured values are evaluated using the predefined algorithm in direct dependence on the second measured values, and
- providing at least one result of the evaluation for output.

2. Method according to Claim 1, **characterized in that** the evaluation result is transmitted to a rail vehicle, and **in that** the evaluation result is output on the rail vehicle.

3. Method according to either of Claims 1 and 2, **characterized in that** the evaluation result is output on the line.

4. Method according to one of Claims 1 to 3, **characterized in that** the first measured values are cyclically transmitted to the control center.

5. Method according to one of Claims 1 to 4, **characterized in that** the first measured values are wirelessly transmitted to the control center.

6. Method according to one of Claims 1 to 5, **characterized in that** the predefined algorithm is suitable for a trend analysis of the first measured values.

7. Method according to one of Claims 1 to 6, **characterized in that** the measurement variables for which first and/or second measured values are recorded are selected from a group of the following measurement variables: speed of the rail vehicle, acceleration of the rail vehicle, rotational speed of a drive motor, electrical motor current, electrical voltage of a motor, thermodynamic temperature of a transmission.

8. System for diagnosing the operating state of a railroad component of a railroad network for rail transport, comprising at least one railroad component, at least one control center and at least one further measuring point, which railroad component comprises at least one first measuring device for recording first measured values of at least one measurement variable for describing the operating state of the railroad component and at least one transmitter for transmitting the first measured values from the railroad component to the control center, and which measuring point comprises at least one further, second measuring device for recording further, second measured values of at least one measurement variable which are independent of the operating state of the railroad component, wherein the at least one further, second measuring device is arranged at a distance from the railroad component, and which control center comprises at least one receiver for transmitting the first measured values from the first measuring device of the railroad component to the control center and at least one controller for evaluating the first measured values using a predefined algorithm in direct dependence on the second measured values.

9. System according to Claim 8, **characterized in that** the controller is suitable for evaluating the first measured values using a plurality of predefined algorithms which are different from one another.

## Revendications

1. Procédé de diagnostic de l'état de fonctionnement d'au moins un élément de voie d'un réseau de voie pour le trafic ferroviaire, lequel élément de voie comprend, pour la description de l'état de fonctionnement de l'élément de voie, au moins un premier dispositif de mesure pour détecter de premières valeurs de mesure d'au moins une grandeur de mesure,
ayant les stades de procédé suivants :
- détection des premières valeurs de mesure au moyen du premier dispositif de mesure,
- détection d'autres deuxièmes valeurs de mesure, indépendante de l'état de fonctionnement de l'élément de voie, au moyen d'au moins un autre deuxième dispositif de mesure,
- transmission au moins des premières valeurs de mesure à un centre de contrôle disposé du côté de la voie,
- exploitation, au moins des premières valeurs de mesure dans le centre de contrôle au moyen d'un algorithme donné à l'avance, en tenant compte des deuxièmes valeurs de mesure, l'exploitation des premières valeurs de mesure s'effectuant au moyen de l'algorithme donné à l'avance en fonction direct des deuxièmes valeurs de mesure, et
- mise à disposition d'au moins un résultat de l'exploitation pour le sortir.

2. Procédé suivant la revendication 1, **caractérisé en ce que** l'on transmet le résultat de l'exploitation à un véhicule ferroviaire et, **en ce que** l'on sort le résultat de l'exploitation sur le véhicule ferroviaire.

3. Procédé suivant l'une des revendications 1 ou 2, **caractérisé en ce que** l'on sort le résultat d'exploitation du côté de la voie.

4. Procédé suivant l'une des revendications 1 à 3, **caractérisé en ce que** l'on transmets les premières valeurs de mesure cycliquement au centre de contrôle.

5. Procédé suivant l'une des revendications 1 à 4, **caractérisé en ce que** l'on transmet les premières valeurs de mesure sans fil au centre de contrôle.

6. Procédé suivant l'une des revendications 1 à 5, **caractérisé en ce que** l'algorithme donné à l'avance est propre à une analyse de tendance des premières valeurs de mesure.

7. Procédé suivant l'une des revendications 1 à 6, **caractérisé en ce que** l'on choisit les grandeurs de mesure, dont on détecte les premières et/ou les deuxièmes valeurs de mesure, dans un groupe de grandeurs de mesure suivantes : vitesse du véhicule ferroviaire, accélération du véhicule ferroviaire, régime d'un moteur de traction, courant électrique du moteur, tension électrique d'un moteur, température thermodynamique d'une transmission.

8. Système de diagnostic de l'état de fonctionnement d'un élément de voie d'un réseau de voie pour le trafic ferroviaire, composé d'au moins un élément de voie, d'au moins un centre de contrôle et d'au moins un autre point de mesure, lequel élément de voie comprend au moins un premier dispositif de mesure pour détecter de premières valeurs de mesure d'au moins une grandeur de mesure, afin de décrire l'état de fonctionnement de l'élément de voie, et au moins un émetteur pour transmettre les premières valeurs de mesure de l'élément de voie au centre de contrôle, et lequel point de mesure comprend au moins un autre deuxième dispositif de mesure pour détecter d'autres deuxièmes valeurs de mesure, indépendantes de l'état de fonctionnement de l'élément de voie, d'au moins une grandeur de mesure, le au moins un autre deuxième dispositif de mesure étant à distance de l'élément de voie et le centre de contrôle comprenant au moins un récepteur pour transmettre les premières valeurs de mesure du premier dispositif de mesure de l'élément de voie au centre de contrôle, et au moins une unité de commande pour exploiter les premières valeurs de mesure au moyen d'au moins un algorithme donné à l'avance, en dépendance directe des deuxièmes valeurs de mesure.

9. Système suivant la revendication 8, **caractérisé en ce que** l'unité de commande est propre à exploiter les premières valeurs de mesure au moyen de plusieurs algorithmes donnés et différents les uns des autres.
